**Europäisches Patentamt**

**European Patent Office**

**Office européen des brevets**

(11) Veröffentlichungsnummer: **0 300 314**

**A2**

(12) **EUROPÄISCHE PATENTANMELDUNG**

(21) Anmeldenummer: **88111041.5**

(22) Anmeldetag: **11.07.88**

(51) Int. Cl.⁴: **B60C 27/06**

(30) Priorität: **24.07.87 DE 3724538**

(43) Veröffentlichungstag der Anmeldung:
**25.01.89 Patentblatt 89/04**

(84) Benannte Vertragsstaaten:
**BE CH DE ES FR GB GR IT LI LU NL**

(71) Anmelder: **ICIS-TIRESTAR VERTRIEB MONTAGE SERVICE W. VON DÜSTERLHO KG**
**Hauptstrasse 18**
**D-6799 Herschweiler-Pettersheim(DE)**

(72) Erfinder: **Der Erfinder hat auf seine Nennung verzichtet**

(74) Vertreter: **Jackisch, Walter, Dipl.-Ing. et al**
**Menzelstrasse 40**
**D-7000 Stuttgart 1(DE)**

(54) **Horizontalglied zum Verbinden von Vertikalgliedern einer Reifenkette.**

(57) Die in Reifenketten eingesetzten Horizontalglieder weisen ein Schließstück mit elliptischem Grundkörper auf das in die Ringöffnung des ringförmigen Horizontalgliedes ragende Haltelaschen aufweist. Durch die Haltelaschen ist das Schließstück relativ kompliziert ausgebildet und teuer in der Herstellung.

Um das Schließstück trotz sicherer, formschlüssiger Verbindung mit dem Ringglied einfach und kostengünstig herstellen zu können, ragen die Halteabschnitte (15, 16) des Schließstückes (2) in Vertiefungen (10) der Schenkel (3, 4) und sind durch eine Einbuchtung der Wand des Schließstückes (2) gebildet.

Das Schließstück (2) ist mit dem Schenkel (3, 4) des Horizontalgliedes (1) im Bereich außerhalb der Ringöffnung formschlüssig verbunden, so daß die Vertikalglieder bei ihrer Hin- und Herbewegung innerhalb des Horizontalgliedes nicht durch die Halteabschnitte (15, 16) behindert sind. Das Schließstück (2) kann als einfaches Hülsenteil ausgebildet sein.

FIG. 1

## Horizontalglied zum Verbinden von Vertikalgliedern einer Reifenkette

Die Erfindung betrifft ein Horizontalglied zum Verbinden von Vertikalgliedern einer Reifenkette nach dem Oberbegriff des Anspruches 1.

Bei einem bekannten Horizontalglied dieser Art (DE-PS 32 34 028) weist das Schließstück einen elliptischen Grundkörper auf an dessen beiden Längsseiten jeweils eine Haltelasche vorgesehen ist, die zur formschlüssigen Verbindung mit dem Ringglied nach innen in die Ringöffnung des Ringkörpers des Ringgliedes gebogen wird. Durch die Haltelaschen ist das Schließstück relativ kompliziert ausgebildet. Außerdem ist zur Herstellung der Haltelaschen relativ viel Material erforderlich, was die Herstellung des Schließstückes und damit die Kosten des Horizontalgliedes wesentlich erhöht. Da die Haltelaschen in die Ringöffnung ragen, besteht ferner der Nachteil, daß sie die Beweglichkeit der in das Ringglied eingehängten Vertikalglieder beeinträchtigen können.

Der Erfindung liegt die Aufgabe zugrunde, ein Horizontalglied dieser Art so auszubilden, daß das Schließstück trotz sicherer, formschlüssiger Verbindung mit dem Ringglied einfach und kostengünstig hergestellt werden kann, wobei eine Behinderung der Beweglichkeit der Vertikalglieder im Ringglied durch die Halteabschnitte vermieden sein soll.

Diese Aufgabe wird bei einem Horizontalglied der gattungsbildenden Art erfindungsgemäß mit den kennzeichnenden Merkmalen des Anspruches 1 gelöst.

Infolge der erfindungsgemäßen Ausbildung ist die Formschlußverbindung zwischen dem Schließstück und den Schenkeln im Bereich außerhalb der Ringöffnung des Ringgliedes vorgesehen, so daß die Vertikalglieder bei ihrer Hin- und Herbewegung innerhalb des Ringgliedes nicht durch die Halteabschnitte behindert sind. Vorteilhaft ist ferner, daß das Schließstück als einfaches Hülsenteil ausgebildet sein kann, wobei keine zusätzlichen Haltelaschen oder dgl. erforderlich sind. Vielmehr wird das Schließstück ausschließlich durch plastische Verformung von Wandabschnitten am Ringglied gesichert. Hierzu müssen lediglich nach dem Aufsetzen des Schließstückes auf die Schenkel die entsprechenden Wandabschnitte mit Hilfe eines Werkzeuges nach innen in die benachbarte Vertiefung gedrückt werden. Hierbei bilden sich die Halteabschnitte bzw. Einbuchtungen oder Eindellungen, die formschlüssig in die Vertiefung ragen. Auf diese Weise kann eine äußerst sichere Verbindung des Schließstückes mit dem Ringglied erreicht werden, wobei das Schließstück kostengünstig und einfach hergestellt werden kann.

Weitere Merkmale der Erfindung ergeben sich aus den weiteren Ansprüchen, der Beschreibung und den Zeichnungen.

Die Erfindung wird nachstehend anhand mehrerer in den Zeichnungen dargestellter Ausführungsbeispiele näher beschrieben. Es zeigt:

Fig. 1 einen Teil eines erfindungsgemäßen Horizontalgliedes teilweise in Ansicht und teilweise im Schnitt,

Fig. 2 einen Schnitt längs der Linie II-II in Fig. 1,

Fig. 3 ein Schließstück des Horizontalgliedes nach den Fig. 1 und 2 in einem Schnitt längs der Linie III-III in Fig. 2,

Fig. 4 eine zweite Ausführungsform eines erfindungsgemäßen Horizontalgliedes in einer Darstellung entsprechend Fig. 1,

Fig. 5 einen Schnitt längs der Linie V-V in Fig. 4,

Fig. 6 eine dritte Ausführungsform eines erfindungsgemäßen Horizontalgliedes teilweise im Schnitt und teilweise in Ansicht,

Fig. 7 einen Schnitt längs der Linie VII-VII in Fig. 6,

Fig. 8 ein Schließstück des Horizontalgliedes nach den Fig. 6 und 7 im Axialschnitt und in plastisch verformtem Zustand.

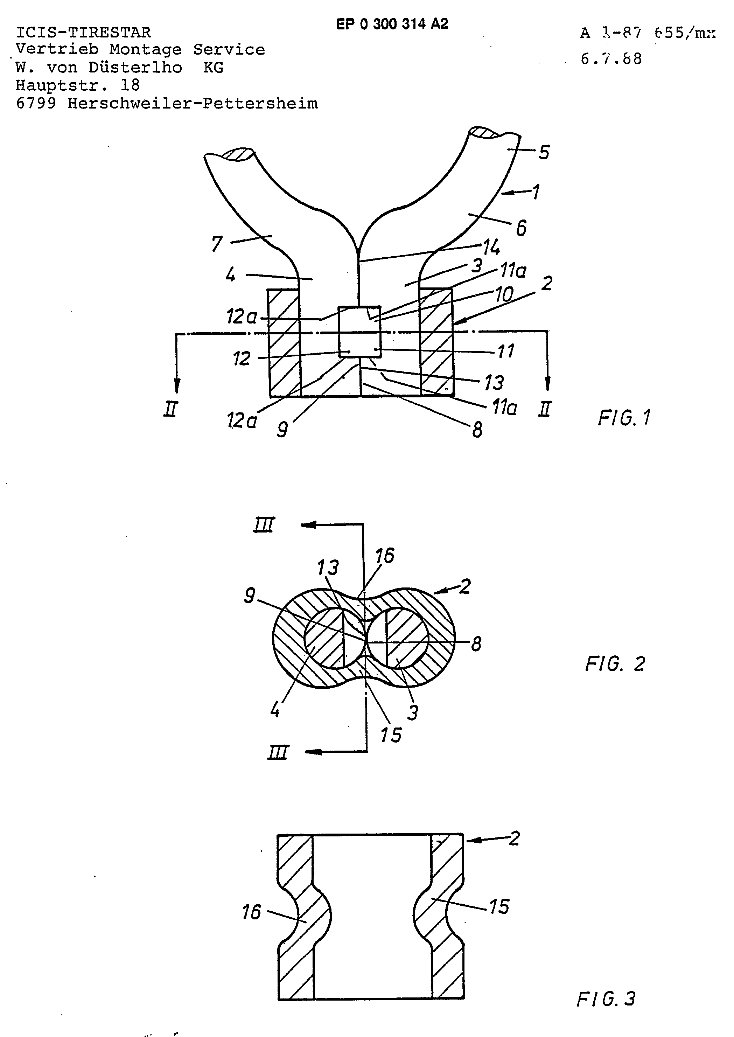

Das Horizontalglied nach den Fig. 1 bis 3 besteht aus einem Ringglied 1 und einem hülsenförmigen Schließstück 2, das auf nach außen ragenden Schenkeln 3, 4 des Ringgliedes befestigt ist. Das Ringglied 1 weist einen Ringkörper 5 auf, der über teilkreisförmig nach außen gekrümmte Übergangsabschnitte 6, 7 in die Schenkel 3, 4 übergeht. Sie liegen vor der Montage des Schließstückes mit Abstand voneinander und begrenzen eine (nicht dargestellte) Einführöffnung für in das Ringglied 1 einzuhängende (ebenfalls nicht dargestellte) Vertikalglieder einer Reifenkette. Die Schenkel 3, 4 werden, nachdem die Vertikalglieder eingehängt sind, durch elastische Verformung des Ringgliedes 1 in die in Fig. 1 dargestellte Lage zusammengedrückt, in der sie mit ihren Innenseiten 8, 9 aneinanderliegen. Da die Schenkel 3, 4 runden, vorzugsweise kreisförmigen Querschnitt haben, liegen die Schenkel mit Linienberührung 13, 14 aneinander an. Zur Lagesicherung des Schließstückes 2 auf den Schenkeln 3, 4 bilden die aneinanderliegenden Schenkel eine durch einen Durchbruch gebildete Vertiefung 10. Sie wird von zwei in Seitenansicht gem. Fig. 1 U-förmigen Ausnehmungen 11, 12 der beiden Schenkel 13, 14 gebildet. Die Ausnehmungen 11, 12 sind in Richtung zueinander offen und ihre Seitenwände 11a, 12a fluchten in Ansicht gem. Fig. 1, wenn die Schenkel 3, 4 aneinanderliegen. In Seitenansicht gem. Fig. 1 ist die Vertiefung 10 rechteckig ausgebildet. In axialer Richtung der Schenkel 3, 4 erstrecken sich die Ausnehmungen 11, 12 über etwa ein Drittel der Länge der Schenkel und liegen etwa in halber Schenkellänge. Die Tiefe der Ausnehmungen 11, 12 ist kleiner als der Radius der Schenkel; vorzugsweise beträgt die Breite der Ausnehmungen 11, 12 etwa ein Drittel des Durchmessers der Schenkel 3 bzw. 4. Die Innenseiten 8, 9 liegen im Bereich axial benachbart zu der Vertiefung 10 an den Berührungsstellen 13, 14 aneinander an.

Zur Lagesicherung des Schließstückes 2 auf den Schenkeln 3, 4 wird nach dem Zusammenbiegen der Schenkel 3, 4 über die aneinanderliegenden Schenkel das Schließstück 2 geschoben, bis es die in Fig. 1 dargestellte Lage einnimmt. Danach wird das Schließstück mit einem Werkzeug, wie einer Zange oder dgl. plastisch so verformt, daß die in Höhe der Vertiefung 10 liegenden Wandbereiche nach innen in die Vertiefung 10 ragen. Die plastisch verformten Wandbereiche des Schließstückes 2 bilden Einbuchtungen bzw. Eindellungen 15, 16 (Fig. 2, 3), die Formschlußglieder des Schließstückes 2 bilden.

Infolge dieser Formschlußverbindung ist das Schließstück 2 einwandfrei gegen Verdrehen und Verschieben auf den Schenkeln 3, 4 gesichert. Zur Formschlußverbindung müssen lediglich die Ausnehmungen 11, 12 in den Schenkeln vorgesehen und das Schließstück im Bereich der Vertiefung 10 in der beschriebenen Weise plastisch verformt werden. Da das Schließstück als Hülse ausgebildet ist, kann das Horizontalglied konstruktiv einfach und mit geringen Kosten hergestellt und das Schließstück einfach und schnell montiert werden.

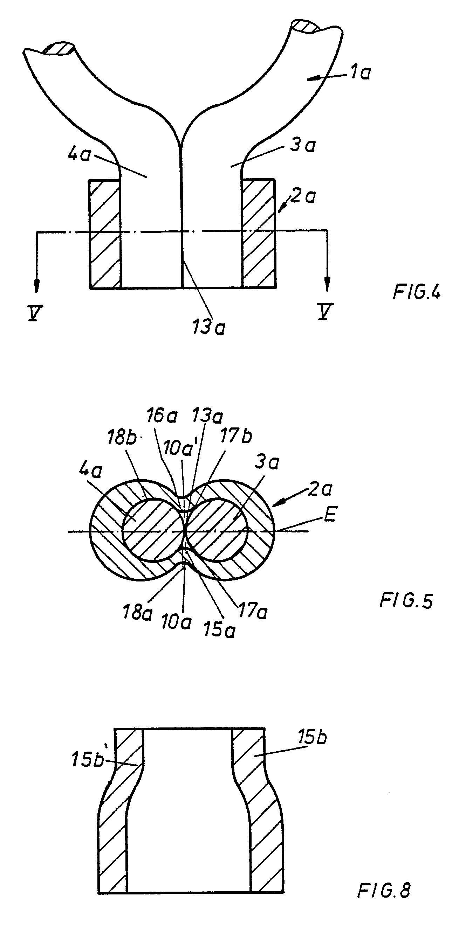

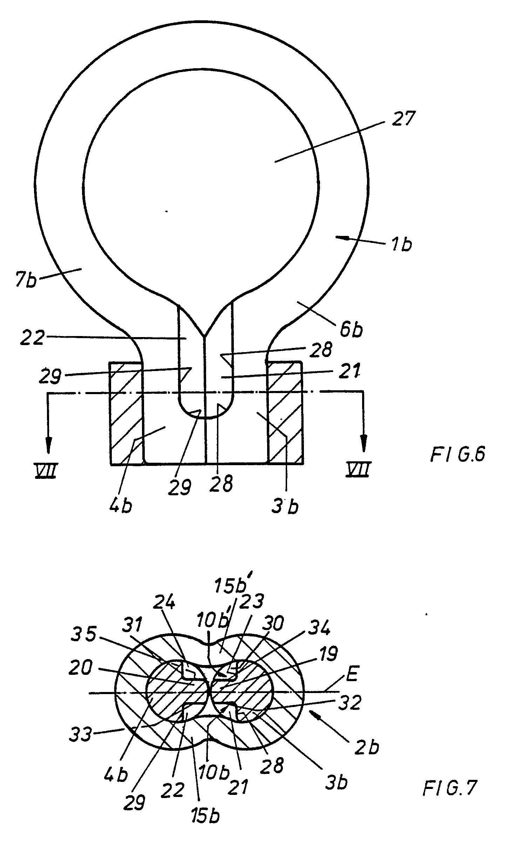

Die Ausführungsform nach den Fig. 4 und 5 unterscheidet sich dadurch von der zuvor beschriebenen Ausführungsform, daß die Schenkel 3a, 4a über ihre ganze Länge gleichen kreisförmigen Querschnitt aufweisen, also keine Ausnehmungen haben. Das hülsenförmige Schließstück 2a ist entsprechend ausgebildet wie das Schließstück 2 gem. den Fig. 1 bis 3. Es wird dadurch auf den Schenkeln 3a, 4a befestigt, daß Wandbereiche des Schließstückes 2a plastisch verformt werden. Da die mit Linienberührung aneinanderliegenden Schenkel 3a, 4a kreisförmigen Querschnitt haben, werden auf einander gegenüberliegenden Seiten der Schenkel 3a, 4a Vertiefungen 10a, 10a' gebildet, die sich über die ganze Länge der Schenkel erstrecken (Fig. 5).

Die Vertiefungen 10a und 10a' sind durch die Berührungslinie 13a der Schenkel 3a, 4a voneinander getrennt und werden durch an diese Berührungslinie anschließende Umfangsabschnitte 17a, 18a und 17b, 18b der Schenkel begrenzt. In diese Vertiefungen 10a, 10a' werden die benachbart liegenden Wandbereiche 15a, 16a des Schließstückes 2a gedrückt. Wie schon bei der vorigen Ausführungsform wird durch die teilweise plastische Verformung das Schließstück 2a fest gegen die Schenkel 3a, 4a gezogen, so daß es an den Schenkeln über einen großen Teil ihres Umfanges fest anliegt. Im Gegensatz zur vorigen Ausführungsform ist das Schließstück 2a in Längsrichtung der Schenkel 3a, 4a nicht formschlüssig gesichert, sondern sitzt mit Reibschluß auf den Schenkeln. Die Stärke des Reibschlusses kann sehr einfach durch den Verformungsgrad der Wandbereiche 15a, 16a des Schließstückes 2a eingestellt werden. Je stärker die Wandbereiche 15a, 16a des Schließstückes 2a plastisch verformt werden, desto stärker wird das Schließstück an die Schenkel 3a, 4a gepreßt. Der Reibschluß ist auf jeden Fall so hoch, daß auch unter hoher Zugbeanspruchung des Horizontalgliedes das Schließstück 2a nicht von den Schenkeln 3a, 4a abgezogen werden kann.

Das Horizontalglied gem. den Fig. 4 und 5 ist konstruktiv einfach ausgebildet, da das Ringglied aus einem Draht mit konstantem Querschnitt hergestellt werden kann. Eine nachträgliche Bearbeitung des Ringgliedes 1a ist nicht erforderlich. Das Schließstück 2a wird durch eine einfache Hülse gebildet.

Bei der Ausführungsform nach den Fig. 6 und 8 weisen die aneinanderliegenden Schenkel 3b, 4b zwei Vertiefungen 10b und 10b' auf, die durch jeweils zwei einander gegenüberliegende Aussparungen 21 bis 24 der Schenkel 3b, 4b gebildet werden. Die beiden Aussparungen 21, 23 und 22, 24 jedes Schenkels 3b und 4b sind durch Stege 19, 20 voneinander getrennt. Ihre Dicke ist kleiner als die quer zur Verbindungsebene E der Schenkel 3b, 4b gemessene maximale Breite der Aussparungen 21 bis 24. Die Stirnseiten 25, 26 der Stege 19, 20 sind entsprechend dem Querschnittsradius der Schenkel 3b, 4b abgerundet, so daß die Schenkel über ihre gesamte Höhe linienförmig aneinander abgestützt sind. Die Aussparungen 21 bis 24 und die Stege 19, 20 erstrecken sich von der Ringgliedöffnung 27 des Ringgliedes 1b bzw. von dessen Übergangsabschnitten 6b, 7b aus bis etwa über drei Viertel der Länge der Schenkel 3b, 4b und enden mit Abstand von den freien Enden der Schenkel. Wie die Fig. 6 und 7 zeigen, werden die Aussparungen 21 bis 24 senkrecht zur Verbindungsebene E von ebenen Böden 28 bis 31 begrenzt, die an ihrem den Schenkelstirnseiten zugewandten Enden teilkreisförmig in Richtung auf den jeweils gegenüberliegenden Schenkel verlaufen. Bei aneinanderliegenden Schenkeln (Fig. 6) schließen die Böden 28 bis 31 mit ihren gekrümmten Enden aneinander an, so daß die durch die Aussparungen 21, 22 und 23, 24 gebildeten Vertiefungen 10b und 10b' teilkreisförmig gerundete und sie in Richtung auf die Stirnseiten der Schenkel 3b, 4b begrenzende Böden haben. In Richtung auf die Ringgliedöffnungen 27 sind die Vertiefungen 10b, 10b' offen. Die Böden 28 bis 31 schließen über ihre ganze Länge rechtwinklig an die Seitenflächen 32 bis 35 der Stege 19, 20 an.

In der Ausgangslage haben die Schenkel 3b, 4b - wie bei den vorhergehenden Ausführungsformen - Abstand voneinander, so daß in das Ringglied 1b die Vertikalglieder eingehängt werden können. Dann werden die Schenkel 3b, 4b in die in Fig. 7 dargestellte Lage elastisch zusammengedrückt und über die Schenkel das Schließstück 2b geschoben. Anschließend wird das Schließstück unter Bildung der Halteabschnitte 15b, 15b' plastisch so verformt, daß, entsprechend wie bei den zuvor beschriebenen Ausführungsbeispielen, eine formschlüssige Verbindung zwischen dem Schließstück und dem Ringglied erreicht wird.

Hierzu wird das Schließstück nach dem Aufschieben an den den Vertiefungen 10b, 10b' gegenüberliegenden Wandabschnitten zusammengedrückt, die Einbuchtungen oder Eindellungen 15b, 15b' bilden, mit denen das Schließstück 2b in die Vertiefungen ragt. Diese Eindellungen oder Einbuchtungen bilden die Halteabschnitte, mit denen das Schließstück 2b gegen Herabziehen von den Schenkeln 3b, 4b gesichert ist. Die Böden 28, 31 bilden mit ihren teilkreisförmig gekrümmten Enden axial wirkende Sicherungsglieder für die Halteabschnitte 15b, 15b' des Schließstückes 2b. Es ist wiederum als einfaches Hülsenteil ausgebildet, das keine zusätzlichen Halteabschnitte oder dgl. aufweist und dadurch einfach und kostengünstig hergestellt werden kann.

**Ansprüche**

1. Horizontalglied zum Verbinden von Vertikalgliedern einer Reifenkette, insbesondere einer Reifengleitschutzkette mit einem Ringglied, das nach außen ragende Schenkel hat, die über Übergangsabschnitte an einem Ringkörper des Ringgliedes anschließen und die bei einem aufgesetzten Schließstück einander berühren, wobei das Schließstück mit verformbaren Halteabschnitten am Ringglied gesichert ist, dadurch gekennzeichnet, daß die Halteabschnitte (15, 16; 15a, 16a; 15b, 16b) des Schließstückes (2; 2a; 2b) in Vertiefungen (10; 10a, 10a'; 10b, 10b') der Schenkel (3, 4; 3a, 4a; 3b, 4b) ragen, quer zu einer die Längsmittelachse der Schenkel (3, 4; 3a, 4a; 3b, 4b) verbindenden Verbindungsebene (E) verlaufen und durch eine Einbuchtung der Wand des Schließstückes (2; 2a; 2b) gebildet sind.

2. Horizontalglied nach Anspruch 1, dadurch gekennzeichnet, daß die Vertiefung (10) durch eine Durchbrechung in den Schenkeln (3, 4) des Ringgliedes (1) gebildet ist.

3. Horizontalglied nach Anspruch 1 oder 2, dadurch gekennzeichnet, daß jeder Schenkel (3, 4) eine Ausnehmung (11, 12) aufweist, die in Richtung auf den jeweils gegenüberliegenden Schenkel offen ist, und daß die Ausnehmungen (11, 12) die Vertiefung (10) bilden.

4. Horizontalglied nach einem der Ansprüche 1 bis 3, dadurch gekennzeichnet, daß die Vertiefung (10) etwa in halber Länge der Schenkel (3, 4) liegt.

5. Horizontalglied nach Anspruch 1, dadurch gekennzeichnet, daß die Vertiefung (10a, 10a') von einer Berührungslinie (13a) der Schenkel (3a, 4a) und daran anschließenden abgerundeten Umfangsabschnitten (17a, 17b, 18a, 18b) der Schenkel begrenzt ist.

6. Horizontalglied nach Anspruch 1, dadurch gekennzeichnet, daß die Schenkel (3b, 4b) auf ihren einander zugewandten Innenseiten jeweils einen Längssteg (19, 20) aufweisen, mit dem sie bei montiertem Schließstück (2b) aneinanderliegen, daß auf beiden Seiten der Längsstege (19, 20) jeweils eine Ausnehmung (21, 24) gebildet ist, und daß die einander gegenüberliegenden Ausnehmungen (21, 23 und 22, 24) der Schenkel (3b, 4b) jeweils eine Vertiefung (10b, 10b') für die Halteabschnitte (15b, 16b) des Schließstückes (2b) bilden.

7. Horizontalglied nach einem der Ansprüche 1 bis 6, dadurch gekennzeichnet, daß sich die Vertiefung (10; 10a, 10a'; 10b, 10b') in Längsrichtung der Schenkel (3, 4; 3a, 4a; 3b, 4b) erstreckt.

8. Horizontalglied nach einem der Ansprüche 1 bis 7, dadurch gekennzeichnet, daß die Länge der Vertiefung (10; 10a, 10a'; 10b, 10b') mindestens etwa einem Drittel der Länge der Schenkel (3, 4; 3a, 4a; 3b, 4b) entspricht, vorzugsweise größer ist als die halbe Länge der Schenkel.

9. Horizontalglied nach einem der Ansprüche 1 bis 8, dadurch gekennzeichnet, daß die quer zur Verbindungsebene (E) der Schenkel (3, 4; 3a, 4a; 3b, 4b) gemessene Tiefe der Vertiefung (10; 10a, 10a'; 10b, 10b') mindestens etwa einem Drittel des Durchmessers der Schenkel entspricht.

10. Horizontalglied nach Anspruch 6 oder 9, dadurch gekennzeichnet, daß die Tiefe der Vertiefungen (10b, 10b') größer, vorzugsweise etwa doppelt so groß ist wie die Dicke der Stege (19, 20).

ICIS-TIRESTAR
Vertrieb Montage Service
W. von Düsterlho  KG
Hauptstr. 18
6799 Herschweiler-Pettersheim

A 1-87 655/mx
6.7.88

FIG.1

FIG. 2

FIG. 3

FIG.4

V

V

13a

18b  16a  13a

4a  10a'  17b

3a

2a

E

18a  10a  15a  17a

FIG.5

15b'

15b

FIG.8

EP 0 300 314 A2

FIG.6

FIG.7